# EUROPÄISCHE PATENTSCHRIFT

(11) **EP 2 853 145 B1**
(45) Veröffentlichungstag und Bekanntmachung des Hinweises auf die Patenterteilung: **10.10.2018**
(21) Anmeldenummer: 14177105.5
(22) Anmeldetag: 15.07.2014
(51) Int. Cl.: A01F 15/07

(54) **Rundballenpresse**
Round baling press
Presse à balles rondes

(30) Priorität: 26.09.2013 DE 102013110626
(43) Veröffentlichungstag der Anmeldung: 01.04.2015
(73) Patentinhaber: Usines CLAAS France, 57141 Metz (FR)
(72) Erfinder: Baros, Geoffroy, 90130 Montreux Chateau (FR); Hasse, Lionel, 57420 Solgne (FR)
(74) Vertreter: Budach, Steffen

(56) Entgegenhaltungen:
- EP-A1- 1 438 889
- EP-A1- 2 050 330
- DE-C1- 19 806 460

## Beschreibung

Die Erfindung betrifft eine Rundballenpresse gemäß dem Oberbegriff des Anspruchs 1.

Eine derartige Rundballenpresse ist z.B. aus EP 1 438 889 A1 bekannt.

Rundballenpressen werden in der Landwirtschaft eingesetzt, um am Feldboden im Schwad abgelegtes halmartiges Erntegut wie beispielsweise Stroh, Heu, Gras und dergleichen aufzunehmen und zu runden, insbesondere zylinderförmigen Ballen, sogenannten Rundballen, zu pressen. Die Bildung des Ballens sowie der Pressvorgang finden in einer Presskammer statt, die umfangsseitig durch einen (oder mehrere) umlaufenden Riemen und/oder rotierende Stahlrollen begrenzt ist. Sind diese Pressmittel (Riemen bzw. Rollen) ortsfest positioniert, so handelt es sich um eine Festkammerpresse, sind die Pressmittel in deren Position veränderlich, um die Presskammer zum Zweck der Herstellung von Ballen unterschiedlicher Größe in deren Raumgröße verändern zu können, so handelt es sich um eine Ballenpresse mit variabler Kammer. Gepresste Rundballen werden entweder mit Schnüren und/oder mit Netzen gebunden, damit der Rundballen seine durch den Pressvorgang erzeugte zylindrische Form beibehält.

Insbesondere bei der Verarbeitung von Gras ist es zweckmäßig, die gepressten Rundballen nach dem Press- und Bindevorgang mittels eines sogenannten Ballenwicklers unter weitestgehendem Ausschluss von Luft mit einem Wickelmaterial, in der Regel mit Folie (z.B. aus Polyethylen) zu umhüllen, um eine anschließende Gärung zu Silage zu ermöglichen bzw. zu begünstigen.

Die Vorgänge des Pressens und Wickelns von Rundballen lassen sich besonders zeiteffizient mit Rundballenpressen durchführen, die zusätzlich mit einem der Presskammer nachgelagerten Ballenwickler ausgestattet sind. Eine derartige Rundballenpresse, auch "Press-Wickelkombination" bezeichnet, ist beispielsweise aus der EP 2 050 330 A1 bekannt. Die darin beschriebene Rundballenpresse ist heckseitig mit einem Ballenwickler ausgestattet, der im Wesentlichen einen Wickeltisch zur Aufnahme eines gepressten Rundballens sowie einen um eine vertikale Achse drehbaren Wickelarm umfasst. Der zweigliedrige Wickelarm ist jeweils endseitig mit einem Folienhalter ausgestattet, so dass sich ein auf dem Wickeltisch liegender Rundballen bei Rotation des Wickelarms mit Folie umhüllen lässt. Indem der Rundballen während des Umhüllens auf dem Wickeltisch zusätzlich um eine horizontale Drehachse in Drehung versetzt wird, ist der Rundballen nach Abschluss des Wickelvorgangs allseitig mit Folie umhüllt.

Die heutige Praxis erfordert, dass sich mit einem Ballenwickler ausgestattete Rundballenpressen möglichst vielseitig einsetzen lassen. So soll ein Einsatz bei verschiedenen Erntegutarten (Stroh, Heu, Gras) möglich sein und soll die Herstellung von Rundballen unterschiedlicher Größe möglich sein. Als nachteilig an heute bekannten Rundballenpressen ist in diesem Zusammenhang anzusehen, dass die herstellbare Ballengröße, insbesondere bezogen auf den Durchmesser des Rundballens, durch den Ballenwickler begrenzt ist, der aus unterschiedlichen Gründen (zulässige Fahrzeugbreite, -höhe und - länge gemäß Straßenverkehrsordnung) nur beschränkte Abmessungen aufweisen kann. So behindert oder gar verhindert der Ballenwickler bei Überschreiten bestimmter Ballenmaße die Förderung des Rundballens aus der Presskammer. Große Rundballen aus Stroh, die sich eigentlich mit der Presskammer herstellen ließen, für die aber eine Folienumwicklung gar nicht erforderlich bzw. gar nicht erwünscht ist, können demnach nicht mit diesen Rundballenpressen hergestellt werden. Die Ausnutzung eines durch die Presskammer eigentlich zur Verfügung stehenden großen Presskammervolumens ist daher nicht möglich.

Es ist eine Aufgabe der vorliegenden Erfindung, eine mit einem Ballenwickler ausgestattete Rundballenpresse anzugeben, die sich in verschiedenen Erntebedingungen einsetzen lässt, wobei insbesondere eine höhere Nutzung vorhandener Kapazität der Rundballenpresse erzielbar sein soll.

Die Aufgabe wird gelöst durch eine Rundballenpresse mit den Merkmalen des Anspruchs 1. Diese ist dadurch gekennzeichnet, dass der Ballenwickler aus einer Wickelkonfiguration, in welcher ein Rundballen mit Wickelmaterial umhüllbar ist, in eine Nicht-Wickelkonfiguration bringbar ist, in welcher sich ein übergroßer Rundballen aus der Presskammer der Rundballenpresse abladen lässt. Letzteres erfolgt dabei insbesondere, ohne dass der Rundballen mit Wickelmaterial umhüllt wird. Erfindungsgemäß ist der Ballenwickler dazu in verschiedene Konfigurationen bringbar.

Für Rundballen, die eine normale Größe aufweisen, d.h. innerhalb bestimmter Grenzen liegende Abmessungen (insbesondere bezogen auf den Durchmesser), lässt sich der Ballenwickler in die Wickelkonfiguration bringen, so dass ein normal großer Rundballen auf für sich gesehen herkömmliche Weise mit Wickelmaterial umhüllt werden kann. Dabei ist bevorzugt der Wickelarm in Bezug auf die Aufnahme so positioniert, dass ein auf der Aufnahme liegender Rundballen etwa auf mittlerer Höhe mit Folie umhüllt wird. Aufgrund der notwendigen Lagerung des Wickelarms oberhalb der Aufnahme wird dabei ein für den auf der Aufnahme liegenden Rundballen zur Verfügung stehender Raum zumindest nach oben vom Wickelarm begrenzt.

Wird in der Presskammer jedoch ein übergroßer Rundballen gepresst, also ein Rundballen, der sich aufgrund zumindest einer übergroßer Abmessung (insbesondere bezogen auf den Durchmesser) nicht mit dem Ballenwickler mit Wickelmaterial umhüllen lässt und/oder der aufgrund zumindest einer übergroßer Abmessung (insbesondere bezogen auf den Durchmesser) den Ballenwickler nicht einmal passieren kann, so lässt sich der Ballenwickler der erfindungsgemäßen Rundballenpresse in eine Nicht-Wickelkonfiguration bringen. In dieser Nicht-Wickelkonfiguration lässt sich der übergroße Rundballen, auch ohne mit Wickelmaterial umhüllt zu werden, zumindest aus der Presskammer abladen. Die Förderung des übergroßen Rundballens aus der Presskammer wird dabei nicht durch den Ballenwickler behindert.

Vorteilhaft ist in der Nicht-Wickelkonfiguration der Wickelarm bezüglich der Aufnahme so positioniert, dass sich ein in der Presskammer gepresster übergroßer Rundballen unter Vermeidung einer Kollision mit dem Wickelarm oder mit diesem zugehörigen Bauteilen auf die Aufnahme fördern lässt, um von dort abgeladen zu werden. Es gibt verschiedene Möglichkeiten, dies umzusetzen.

Erfindungsgemäß sind hierzu Mittel vorgesehen, mit denen der Wickelarm bezogen auf die Aufnahme seitlich bewegbar ist, um den Ballenwickler aus einer Wickelkonfiguration in eine Nicht-Wickelkonfiguration zu bringen. Dabei umfassen die Mittel eine schwenkbewegliche Lagerung des Wickelarms, indem eine den Wickelarm tragende Halteeinrichtung schwenkbeweglich gegenüber einem Rahmen der Rundballenpresse gelagert ist.

Eine konstruktiv vorteilhafte Ausgestaltung sieht vor, dass die Halteeinrichtung zwei Tragelemente umfasst, die jeweils auf gegenüberliegenden Seiten einer von der Presskammer zur Aufnahme verlaufenden Ballenrollbahn gegenüber dem Rahmen um eine etwa vertikale Achse drehbar gelagert sind, wobei die Tragelemente in der Wickelkonfiguration zu einer geschlossenen, teilweise oberhalb der Ballenbahn verlaufenden Struktur verbunden sind, um den Wickelarm oberhalb eines auf der Aufnahme liegenden zu wickelnden Rundballens zu lagern, und wobei die Tragelemente in der Nicht-Wickelkonfiguration voneinander getrennt sind, um ohne Höhenbeschränkung ein Rollen eines übergroßen Rundballens über die Ballenrollbahn zu ermöglichen.

Zur Schaffung einer möglichst hohen Stabilität und Verwindungssteifigkeit können den Tragelementen jeweils an deren Endbereichen zueinander komplementäre Befestigungsmittel zugeordnet sein, mit denen sich die Tragelemente in der Wickelkonfiguration miteinander verbinden lassen.

Ergänzend zu einer seitlichen Bewegbarkeit des Wickelarms können gemäß einer Weiterbildung der Erfindung Mittel vorgesehen sein, mit denen sich der Wickelarm gegenüber der Aufnahme in der Höhe verstellen lässt, um den Ballenwickler aus einer Wickelkonfiguration in eine Nicht-Wickelkonfiguration zu bringen. In diesem Fall lässt sich der Wickelarm also auch nach oben bewegen, um Kollisionen mit einem übergroßen Rundballen zu vermeiden. Auch hierbei kann in Kauf genommen werden, dass der übergroße Rundballen nicht mit Wickelmaterial umhüllt wird.

Die dabei zum Einsatz kommenden Mittel umfassen bevorzugt eine vertikal ausgerichtete Linearführung, wonach eine den Wickelarm tragende Halteeinrichtung linear höhenbeweglich gegenüber einem Rahmen der Rundballenpresse gelagert ist, und wobei Stellmittel vorgesehen sind, mit denen sich die Halteeinrichtung gegenüber dem Rahmen in der Höhe bewegen lässt. Verschiedene Stellmittel sind denkbar, beispielsweise hydraulisch, elektrisch, pneumatisch und/oder mechanisch wirkende Stellmittel. Als vorteilhaft an einer Linearführung ist unter anderem anzusehen, dass sich bei einer Höhenverstellung die Längenabmessung der gesamten Rundballenpresse nicht verändert.

Ist der Wickelarm zur Einnahme der verschiedenen Konfigurationen in dessen Höhe verstellbar, so kann vorteilhaft eine Steuereinrichtung vorgesehen sein, die betreibbar ist, durch Verstellen der Höhe des Wickelarms in Abhängigkeit der Größe, insbesondere des Durchmessers des auf der Aufnahme liegenden Rundballens die Wickelmaterialabgabeeinrichtung auf eine zum Wickeln des Rundballens geeignete Höhe zu bringen. Auf diese Weise ist für Rundballen, die in der Wickelkonfiguration mit Wickelmaterial umhüllt werden, eine Höhenanpassung der Wickelmaterialabgabeeinrichtung gegeben, so dass Rundballen unterschiedlichen Durchmessers jeweils auf einer geeigneten Höhe gewickelt werden.

Bei Straßenfahrt und/oder beim Abstellen der Rundballenpresse stellt der Ballenwickler aufgrund seiner äußeren Abmessungen oftmals eine Behinderung dar. Vorteilhaft ist der Ballenwickler daher in eine Konfiguration bringbar ist, die sich zum Transport und/oder zur Lagerung der Ballenpresse eignet. Dies kann insbesondere durch Nutzung bereits beschriebener Verstellmöglichkeiten erfolgen, wie insbesondere einer linear höhenbeweglichen Halteeinrichtung des Wickelarms, die zum Transport und/oder zur Lagerung der Ballenpresse in eine möglichst niedrige Position bringbar ist.

Ganz allgemein ist der Rundballenpresse vorteilhaft eine Steuereinrichtung zugeordnet, die betreibbar ist, den Ballenwickler in Abhängigkeit eines Betriebsparameters, insbesondere in Abhängigkeit der Größe, bevorzugt des Durchmessers eines gepressten Rundballens, in eine entsprechende Konfiguration zu bringen. Hierzu verfügt die Steuereinrichtung zweckmäßigerweise über eine Signalanbindung an ein Maschinenbediensystem und/oder über eine Signalanbindung an Sensoren zur Erfassung der Ballengröße und/oder anderer Betriebsparameter. Vorteilhaft nimmt der Ballenwickler dabei durch entsprechende Ansteuerung zugehöriger Aktoren selbsttätig eine geeignete Konfiguration ein.

Eine bevorzugte Ausführung der zuvor beschriebenen Rundballenpresse besteht darin, dass ein auf der Aufnahme liegender Rundballen während eines Wickelvorgangs um eine horizontale Achse drehbar ist. Bei dieser Bauart ist mit verhältnismäßig einfacher Konstruktion ein allseitiges Umwickeln des Rundballens mit Wickelmaterial möglich.

Weitere vorteilhafte Merkmale und sich daraus ergebende Wirkungen der Rundballenpresse werden nachfolgend anhand zweier Ausführungsbeispiele beschrieben, die anhand von vier Figuren erläutert werden. In der Zeichnung zeigen:
- Fig. 1: eine schematische Ansicht einer Rundballenpresse gemäß einem ersten Ausführungsbeispiel von der Seite, wobei der Ballenwickler in einer Wickelkonfiguration ist,
- Fig. 2: eine schematische Ansicht der Rundballenpresse aus Fig. 1 von der Seite, wobei der Ballenwickler in einer Nicht-Wickelkonfiguration ist,
- Fig. 3: eine schematische Ansicht einer Rundballenpresse gemäß einem zweiten Ausführungsbeispiel von oben, wobei der Ballenwickler in einer Wickelkonfiguration ist,
- Fig. 4: eine schematische Ansicht der Rundballenpresse aus Fig. 3 von oben, wobei der Ballenwickler in einer Nicht-Wickelkonfiguration ist.

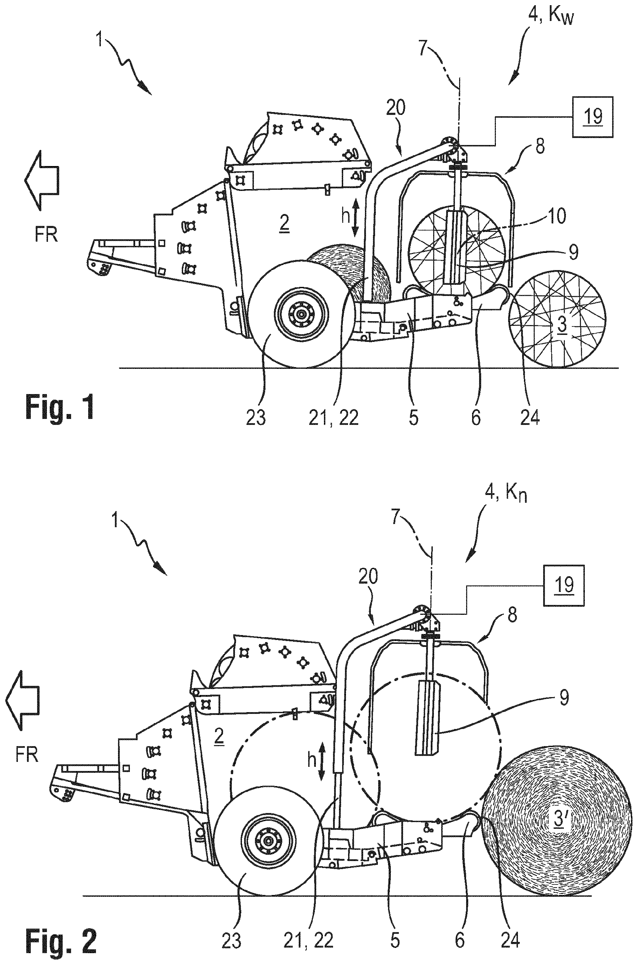

Fig. 1 zeigt eine Rundballenpresse 1 gemäß einem ersten Ausführungsbeispiel von der Seite. Die Rundballenpresse 1 weist einen Rahmen 5 auf, der sich über beidseitig des Rahmens 5 angeordnete Räder 23 bodenseitig abstützt. Die Rundballenpresse 1 lässt sich somit in einer durch den Pfeil FR angezeigten Fahrtrichtung beispielsweise von einem Traktor (nicht gezeigt) über ein Feld ziehen, um auf für sich gesehen bekannte und daher nicht näher zu erläuternde Weise am Boden liegendes halmartiges Erntegut wie beispielsweise Stroh, Heu, Gras und dergleichen aufzunehmen und zu runden, insbesondere zylinderförmigen Ballen, sogenannten Rundballen, zu pressen. Der Pressvorgang findet dabei statt in einer Presskammer 2, die zentral zwischen den Rädern 23, oberhalb des Rahmens 5 angeordnet ist. Die Presskammer 2 ist auf für sich bekannte Weise umfangsseitig durch eine Vielzahl in Rotation versetzbarer Stahlrollen begrenzt. Alternativ oder ergänzend können als Pressmittel auch einer oder mehrere umlaufende Riemen zum Einsatz kommen.

Die Rundballenpresse 1 ist weiterhin mit einem Ballenwickler 4 ausgestattet, der heckseitig, hinter der Presskammer 2 angeordnet ist und sich am Rahmen 5 der Rundballenpresse 1 abstützt. Der Ballenwickler 4 eignet sich zum Umhüllen eines zuvor in der Presskammer 2 gepressten Rundballens 3 mit Folienmaterial, um den Rundballen 3 unter Luftausschluss für die Silage zu verpacken. Der Ballenwickler 4 weist einen als Aufnahme für einen gepressten Rundballen 3 dienenden Wickeltisch 6 und einen Wickelarm 8 auf, der um eine vertikale Achse 7 dreh- und antreibbar oberhalb des Wickeltischs 6 gelagert ist. Der Wickelarm 8 ist zweigliedrig ausgeführt, wobei jeweils endseitig des Wickelarms ein Folienhalter 9 angeordnet ist. In der Ansicht der Fig. 1 ist aufgrund des Drehungszustand des Wickelarms 8 nur ein in diesem Zustand linksseitig des Wickeltischs 6 (bezogen auf die Fahrtrichtung FR) befindlicher Folienhalter 9 zu sehen. Ein zweiter (hier verdeckter) Folienhalter 9 befindet sich - wieder bezogen auf die Fahrtrichtung FR - rechtsseitig des Wickeltischs 6. Bei Drehung des Wickelarms 8 um die vertikale Achse 7 kreisen die Folienhalter 9 um einen auf dem Wickeltisch 6 befindlichen Rundballen 3, um diesen mit Folie zu umhüllen.

Der Wickeltisch 6 weist ein muldenartig geführtes, antreibbares Gurtband 24 auf, das dazu dient, einen gepressten Rundballen 3 an dessen Umfangsfläche aufzunehmen. Ein auf dem Wickeltisch 6 liegender gepresster Rundballen 3 kann durch Antrieb des Gurtbands 24 in Drehung um eine horizontale, mittig durch den Rundballen 3 verlaufende Drehachse 10 versetzt werden, um während des kreisenden Betriebs des Wickelarms 8 allseitig mit Folie umhüllt zu werden.

Im gezeigten ersten Ausführungsbeispiel der Fig. 1 und 2 wird der Wickelarm 8 von einer höhenverstellbaren (angedeutet durch einen Doppelpfeil h) Halteeinrichtung 20 getragen. Dazu ist die Halteeinrichtung 20 mittels einer Linearführung 21, die sich mittels eines Hydraulikzylinders 22 verstellen lässt, gegenüber dem Rahmen 5 höhenbeweglich gelagert.

Wie anhand der Fig. 1 und 2 zu erläutern, lässt sich der Ballenwickler 4 der Rundballenpresse 1 gemäß dem ersten Ausführungsbeispiel mit Hilfe der Höhenverstellung der Halteeinrichtung 20 in verschiedene Konfigurationen bringen. So ist in Fig. 1 ein Zustand gezeigt, in dem sich der Ballenwickler 4 in einer Wickelkonfiguration K_{w} befindet. Dabei befindet sich die den Wickelarm 8 tragende Halteeinrichtung 20 gegenüber dem Rahmen 5 der Rundballenpresse 1 auf einer relativ niedrigen Höhe, so dass sich der an der Halteeinrichtung 20 hängende Wickelarm 8 sowie die daran angebrachten Folienhalter 9 auf einer Höhe befinden, die sich zum Wickeln eines normal großen Rundballens 3 eignet. Ein von der Presskammer 2 auf den Wickeltisch 6 geförderter Rundballen 3 mit normaler Größe kann so mit Wickelfolie umhüllt werden. Eine dem Ballenwickler 4 zugeordnete Steuereinrichtung 19 dient vorteilhaft dazu, durch geeignete Höhenverstellung der Halteeinrichtung 20 in Abhängigkeit des Durchmessers des auf dem Wickeltisch 6 liegenden Rundballens 3 die Folienhalter 9 auf eine zum Wickeln des Rundballens 3 geeignete Höhe einzustellen. Auf diese Weise lassen sich Rundballen 3 unterschiedlichen Durchmessers sicher und präzise wickeln. Vorteilhaft an der Linearführung 21 der Halteeinrichtung 20 ist hier, dass die Lage der Drehachse 7 des Wickelarms 8 unabhängig von der gewählten Höheneinstellung bezogen auf eine gedachte Horizontalebene unverändert bleibt, so dass sich der Rundballen 3 stets im Zentrum des kreisenden Wickelarms 8 befindet. Zudem bleibt aufgrund der rein vertikalen Verstellbarkeit die Gesamtabmessung der Rundballenpresse 1 stets unverändert.

In Fig. 2 ist nun die Rundballenpresse 1 aus Fig. 1 in einem anderen Zustand gezeigt. Im Unterschied zu der Darstellung gemäß Fig. 1 befindet sich in Fig. 2 der Ballenwickler 4 in einer Nicht-Wickelkonfiguration Kₙ. Im gezeigten Fall ist in der Presskammer 2 ein übergroßer Rundballen 3' gepresst worden, d.h. ein Rundballen, der sich insbesondere aufgrund seines übergroßen Durchmessers nicht von dem Ballenwickler 4 mit Wickelmaterial umhüllen lässt und den Ballenwickler 4 - im Zustand K_{w}, wie in Fig. 1 gezeigt - nicht einmal passieren könnte. Ein derartiger übergroßer Rundballen 3' weist beispielsweise einen zwischen 1,60 m und 2,00 m liegenden Durchmesser auf. Damit der übergroße Rundballen 3' die Presskammer 2 ohne Behinderung durch den Wickelarm 8 oder durch sonstige Elemente des Ballenwicklers 4 verlassen kann und von der Ballenpresse 1 abgeladen werden kann, ist in der Nicht-Wickelkonfiguration Kₙ des Ballenwicklers 4 die Halteeinrichtung 20 mittels Hydraulikzylinder 22 entlang der Linearführung 21 in vertikaler Richtung in einer höhere Position bewegt worden. Der Wickelarm 8 befindet sich deshalb ebenfalls in einer entsprechend höheren Position im Vergleich zu Fig. 1. Aufgrund eines vergrößerten vertikalen Abstands zwischen dem Wickeltisch 6 und dem Wickelarm 8 kann der übergroße Rundballen 3', wie in der Fig. 2 durch die drei Kreise angedeutet, von der Presskammer 2 über den Wickeltisch 6 auf den Feldboden abgeladen werden, ohne mit dem Ballenwickler 4 in Berührung zu gelangen bzw. von diesem behindert zu werden. Zwar lässt sich der übergroße Rundballen 3' in dieser Konfiguration Kₙ nicht mit Folie umhüllen, insbesondere bei einem übergroßen Rundballen 3' aus Stroh ist dies jedoch nicht erforderlich und stellt somit keinen Nachteil dar. Vielmehr lässt sich die Ballenpresse 1 gemäß dem ersten Ausführungsbeispiel trotz Vorhandenseins eines Ballenwicklers 4 weiterhin zur Herstellung übergroßer Rundballen 3' einsetzen.

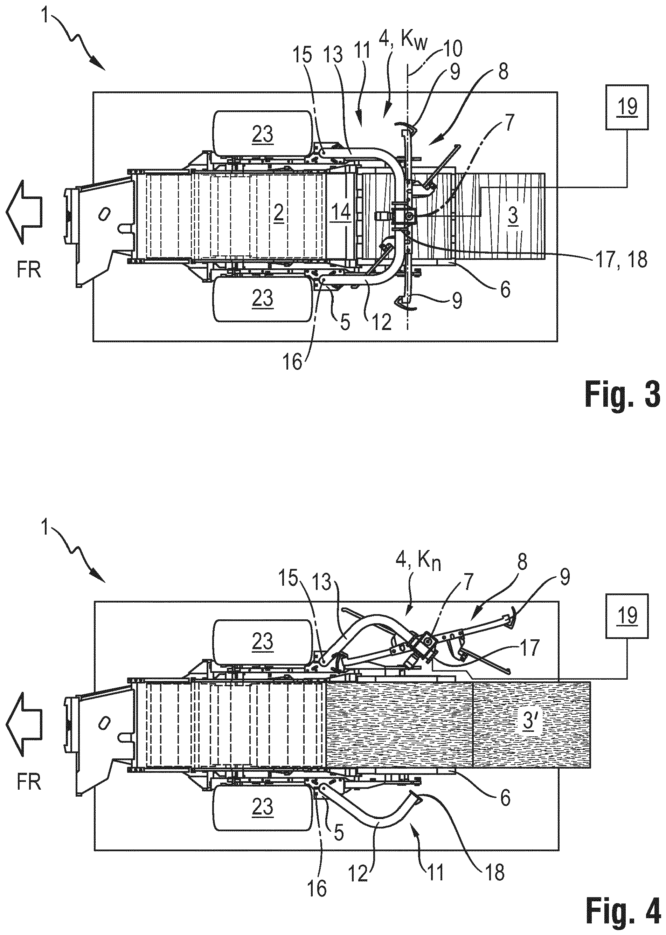

Die Fig. 3 und 4 zeigen eine Rundballenpresse 1 gemäß einem zweiten, erfindungsgemäßen Ausführungsbeispiel in schematischer Draufsicht in verschiedenen Konfigurationen des Ballenwicklers. Die Rundballenpresse 1 gemäß dem zweiten Ausführungsbeispiel entspricht in den vielen Merkmalen der Rundballenpresse 1 des ersten Ausführungsbeispiels. Deshalb sei zur Erläuterung des allgemeinen Aufbaus und der allgemeinen Funktionsweise auf die vorigen Ausführungen zum ersten Ausführungsbeispiel verwiesen. Die Rundballenpresse 1 gemäß dem zweiten Ausführungsbeispiel unterscheidet sich von der in den Fig. 1 und 2 gezeigten jedoch durch den Aufbau und die Funktionsweise des Ballenwicklers 4.

Bei der Rundballenpresse 1 gemäß dem zweiten Ausführungsbeispiel wird der Wickelarm 8 von einer Halteeinrichtung 11 getragen, die eine Bewegung des Wickelarms 8 in bezogen auf die Fahrtrichtung FR der Rundballenpresse 1 seitliche Richtung ermöglicht. Durch die seitliche Bewegbarkeit des Wickelarms 8 kann der Ballenwickler 4 aus einer Wickelkonfiguration K_{w} in eine Nicht-Wickelkonfiguration Kₙ gebracht werden.

Der Wickelarm 8, bei dem - für sich gesehen - es sich um einen wie bereits im ersten Ausführungsbeispiel beschriebenen zweigliedrigen Wickelarm 8 mit zwei Folienhaltern 9 handelt, ist zu diesem Zweck schwenkbeweglich gegenüber dem Rahmen 5 der Rundballenpresse 1 gelagert. Eine Halteeinrichtung 11, welche den Wickelarm 8 trägt, umfasst zwei Tragelemente 12, 13. Davon ist ein rechtes Tragelement 13 auf einer rechten Seite einer Ballenrollbahn 14, die von der Presskammer 2 zur Aufnahme 6 verläuft, um eine Drehachse 15 drehbar gegenüber dem Rahmen 5 gelagert, und ist ein linkes Tragelement 12 auf einer linken Seite der Ballenrollbahn 14 um eine Drehachse 16 drehbar gegenüber dem Rahmen 5 gelagert. Wenn sich der Ballenwickler 4, wie in Fig. 3 gezeigt, in der Wickelkonfiguration K_{w} befindet, sind die Tragelemente 12, 13 zu einer geschlossenen Struktur verbunden, die zumindest im Bereich der Anlenkung des Wickelarms 8 (Drehachse 7), oberhalb der Ballenrollbahn 14 verläuft. Der von der Halteeinrichtung 11 getragene Wickelarm 8 ist bei Einnahme der Wickelkonfiguration K_{w} somit oberhalb eines auf der Aufnahme 6 liegenden zu wickelnden Rundballens 3 positioniert, um diesen mit Folie umhüllen zu können.

Jedes der Tragelemente 12, 13 weist endseitig, d.h. in einem gegenseitigen Kontaktbereich, zueinander komplementäre Befestigungsmittel 17, 18 auf, mit denen die Tragelemente in der Wickelkonfiguration K_{w} zu einer geschlossenen und somit verwindungssteifen Struktur verbindbar sind. Es kann sich bei den Verbindungsmitteln im einfachen Fall um beispielsweise einen dem Tragelement 12 zugeordneten Zapfen 17 und ein dem Tragelement 13 zugeordnetes Loch 18 handeln, die durch Ineinandergreifen eine formschlüssige Verbindung eingehen. Alternativ oder ergänzend können auch aktiv betätigbare Verbindungsmittel zum Einsatz kommen.

In Fig. 4 ist nun die Rundballenpresse 1 aus Fig. 3 in einem anderen Zustand gezeigt. Im Unterschied zu der Darstellung gemäß Fig. 3 befindet sich in Fig. 4 der Ballenwickler 4 in einer Nicht-Wickelkonfiguration Kₙ. Im gezeigten Fall ist in der Presskammer 2 ein übergroßer Rundballen (nicht dargestellt) gepresst worden, d.h. ein Rundballen, der sich insbesondere aufgrund seines übergroßen Durchmessers nicht von dem Ballenwickler 4 mit Wickelmaterial umhüllen lässt und den Ballenwickler 4 - im Zustand K_{w}, wie in Fig. 3 gezeigt - nicht einmal passieren könnte, weil er beispielsweise mit den Tragelementen 12, 13 kollidieren würde. Ein derartiger übergroßer Rundballen 3' weist beispielsweise einen zwischen 1,60 m und 2,00 m liegenden Durchmesser auf.

Damit der übergroße Rundballen 3' die Presskammer 2 ohne Behinderung durch den Wickelarm 8 oder durch sonstige Elemente des Ballenwicklers 4 verlassen kann und von der Ballenpresse 1 abgeladen werden kann, ist in der Nicht-Wickelkonfiguration Kₙ des Ballenwicklers 4 der Wickelarm 8 seitlich verschwenkt worden in eine Position rechts der Ballenrollbahn 14, bezogen auf die Fahrtrichtung FR der Rundballenpresse 1. Um dies zu ermöglichen, sind die Tragelemente 12, 13 in der Nicht-Wickelkonfiguration Kₙ voneinander getrennt worden, indem jeweils das rechte Tragelement 13 um die Drehachse 15 und das linke Tragelement 12 um die Drehachse 16 nach außen um einen Winkel von hier etwa 45° verdreht worden sind. Der Drehwinkel und die Geometrie des rechten Tragelements 13, welches den Wickelarm 8 trägt, sind so gewählt, dass die vertikale Drehachse 7 des Wickelarms 8 rechts außerhalb der Ballenrollbahn 14 positioniert ist, wie in Fig. 4 zu sehen. Bei entsprechender Drehstellung des Wickelarms 8 ist somit ein über der Ballenrollbahn 14 bzw. dem Wickeltisch 6 befindlicher gedachter Raum frei von Behinderungen durch den Ballenwickler 4, so dass auch ein übergroßer Rundballen 3' die Presskammer 2 nach hinten verlassen kann und von der Rundballenpresse 1 abgeladen werden kann, ohne mit dem Ballenwickler 4 zu kollidieren bzw. von diesem behindert zu werden. Es besteht dabei keinerlei Beschränkung des Durchmessers eines über den Wickeltisch 6 zu fördernden Rundballens 3'. Zwar lässt sich der übergroße Rundballen 3' in dieser Konfiguration Kₙ nicht mit Folie umhüllen, insbesondere bei einem übergroßen Rundballen 3' aus Stroh ist dies jedoch nicht erforderlich und stellt somit keinen Nachteil dar. Vielmehr lässt sich die Ballenpresse 1 gemäß dem zweiten Ausführungsbeispiel trotz Vorhandenseins eines Ballenwicklers 4 weiterhin zur Herstellung übergroßer Rundballen 3' einsetzen. Die erforderliche Baulänge der Rundballenpresse 1 ist dabei unverändert.

Die erfindungsgemäße Rundballenpresse 1 gemäß beider beschriebener Ausführungsbeispiele weist damit jeweils eine erhöhte Flexibilität hinsichtlich deren Einsetzbarkeit für unterschiedliche Ballengrößen bzw. -arten auf. Ergänzend sei darauf hingewiesen, dass sich die anhand der Ausführungsbeispiele beschriebenen Funktionsprinzipien einer Höhenverstellung (erstes Ausführungsbeispiel) bzw. einer seitlichen Verstellung des Wickelarms (zweites Ausführungsbeispiel) nicht gegenseitig ausschließen, sondern es auch denkbar ist, die Prinzipien miteinander zu kombinieren.

Wie den Fig. 1 bis 4 zu entnehmen, verfügt die Rundballenpresse 1 beider Ausführungsbeispiele über eine Steuereinrichtung 19. Diese steht in Signalverbindung mit dem Ballenwickler 4 und lässt sich betreiben, in Abhängigkeit eines Betriebsparameters, insbesondere in Abhängigkeit der Größe, bevorzugt des Durchmessers eines gepressten Rundballens 3, 3' den Ballenwickler 4 in eine für den jeweiligen Einsatzzweck geeignete Konfiguration K_{w}, Kₙ zu bringen. Die Steuereinrichtung 19 kann dazu mit einem Bedienterminal und/oder mit einer (nicht dargestellten) Sensorik der Rundballenpresse 1, beispielsweise umfassend einen Ballengrößensensor, in Signalverbindung stehen.

### Bezugszeichenliste

- 1: Rundballenpresse
- 2: Presskammer
- 3: Rundballen
- 4: Ballenwickler
- 5: Rahmen
- 6: Wickeltisch
- 7: vertikale Drehachse
- 8: Wickelarm
- 9: Folienhalter
- 10: horizontale Drehachse
- 11: Halteeinrichtung
- 12: linkes Tragelement
- 13: rechtes Tragelement
- 14: Ballenrollbahn
- 15: rechte Drehachse
- 16: linke Drehachse
- 17: Befestigungsmittel
- 18: Befestigungsmittel
- 19: Steuereinrichtung
- 20: Halteeinrichtung
- 21: Linearführung
- 22: Hydraulikzylinder
- 23: Rad
- 24: Gurtband

- K_{w}: Wickelkonfiguration
- Kₙ: Nicht-Wickelkonfiguration
- h: Höhe
- FR: Fahrtrichtung

## Patentansprüche

1. Rundballenpresse (1) mit einer Presskammer (2) zum Pressen eines Rundballens (3, 3') aus landwirtschaftlichem Erntegut und mit einem der Presskammer (2) nachgelagerten Ballenwickler (4), wobei der Ballenwickler (4) eine Aufnahme (6) für einen gepressten Rundballen (3) und einen um eine vertikale Achse (7) oberhalb der Aufnahme (6) drehbaren Wickelarm (8) mit zumindest einer endseitigen Wickelmaterialabgabeeinrichtung (9) umfasst, um einen auf der Aufnahme (6) befindlichen Rundballen (3) mit Wickelmaterial zu umhüllen,
wobei
der Ballenwickler (4) aus einer Wickelkonfiguration (K_{w}), in welcher ein Rundballen (3) mit Wickelmaterial umhüllbar ist, in eine Nicht-Wickelkonfiguration (Kₙ) bringbar ist, in welcher sich ein übergroßer Rundballen (3') aus der Presskammer (2) der Rundballenpresse (1) abladen lässt, wobei Mittel vorgesehen sind, mit denen der Wickelarm (8) bezogen auf die Aufnahme (6) seitlich bewegbar ist, um den Ballenwickler (4) aus einer Wickelkonfiguration (Kw) in eine Nicht-Wickelkonfiguration (Kn) zu bringen, wobei die Mittel eine schwenkbewegliche Lagerung des Wickelarms (8) umfassen,
**dadurch gekennzeichnet, dass** eine den Wickelarm (8) tragende Halteeinrichtung (11) schwenkbeweglich gegenüber einem Rahmen (5) der Rundballenpresse (1) gelagert ist.

2. Rundballenpresse nach Anspruch 1, **dadurch gekennzeichnet, dass** in der Nicht-Wickelkonfiguration (Kₙ) der Wickelarm (8) bezüglich der Aufnahme (6) so positioniert ist, dass sich ein in der Presskammer (2) gepresster übergroßer Rundballen (3') unter Vermeidung einer Kollision mit dem Wickelarm (8) oder mit diesem zugehörigen Bauteilen (9, 11, 20) auf die Aufnahme (6) fördern lässt, um von dort abgeladen zu werden.

3. Rundballenpresse nach Anspruch 1, **dadurch gekennzeichnet, dass** die Halteeinrichtung (11) zwei Tragelemente (12, 13) umfasst, die jeweils auf gegenüberliegenden Seiten einer von der Presskammer (2) zur Aufnahme (6) verlaufenden Ballenrollbahn (14) gegenüber dem Rahmen (5) um eine etwa vertikale Achse (15, 16) drehbar gelagert sind, wobei die Tragelemente (12, 13) in der Wickelkonfiguration (K_{w}) zu einer geschlossenen, teilweise oberhalb der Ballenbahn (14) verlaufenden Struktur verbunden sind, um den Wickelarm (8) oberhalb eines auf der Aufnahme (6) liegenden zu wickelnden Rundballens (3) zu lagern, und wobei die Tragelemente (12, 13) in der Nicht-Wickelkonfiguration (Kₙ) voneinander getrennt sind, um ohne Höhenbeschränkung ein Rollen eines übergroßen Rundballens (3') über die Ballenrollbahn (14) zu ermöglichen.

4. Rundballenpresse nach Anspruch 3, **dadurch gekennzeichnet, dass** den Tragelementen (12, 13) jeweils an deren Endbereichen zueinander komplementäre Befestigungsmittel (17, 18) zugeordnet sind, mit denen sich die Tragelemente (12, 13) in der Wickelkonfiguration (K_{w}) miteinander verbinden lassen.

5. Rundballenpresse nach einem der vorigen Ansprüche, **dadurch gekennzeichnet, dass** Mittel vorgesehen sind, mit denen sich der Wickelarm (8) gegenüber der Aufnahme (6) in der Höhe (h) verstellen lässt, um den Ballenwickler (4) aus einer Wickelkonfiguration (K_{w}) in eine Nicht-Wickelkonfiguration (Kₙ) zu bringen.

6. Rundballenpresse nach Anspruch 5, **dadurch gekennzeichnet, dass** die Mittel eine vertikal ausgerichtete Linearführung (21) umfassen, wonach eine den Wickelarm (8) tragende Halteeinrichtung (11, 20) linear höhenbeweglich gegenüber einem Rahmen (5) der Rundballenpresse (1) gelagert ist, und wobei Stellmittel (22) vorgesehen sind, mit denen sich die Halteeinrichtung (20) gegenüber dem Rahmen (5) in der Höhe (h) bewegen lässt.

7. Rundballenpresse nach einem der vorigen Ansprüche, **gekennzeichnet durch** eine Steuereinrichtung (19), die betreibbar ist, durch Verstellen der Höhe (h) des Wickelarms (8) in Abhängigkeit der Größe, insbesondere des Durchmessers des auf der Aufnahme liegenden Rundballens (3) die Wickelmaterialabgabeeinrichtung (9) auf eine zum Wickeln des Rundballens (3) geeignete Höhe zu bringen.

8. Rundballenpresse nach einem der vorigen Ansprüche, **dadurch gekennzeichnet, dass** der Ballenwickler (4) in eine Konfiguration bringbar ist, die sich zum Transport und/oder zur Lagerung der Ballenpresse (1) eignet.

9. Rundballenpresse nach einem der vorigen Ansprüche, **gekennzeichnet durch** eine Steuereinrichtung (19) die betreibbar ist, den Ballenwickler (4) in Abhängigkeit eines Betriebsparameters, insbesondere in Abhängigkeit der Größe, bevorzugt des Durchmessers eines gepressten Rundballens (3, 3'), in eine entsprechende Konfiguration (K_{w}, Kₙ) zu bringen.

10. Rundballenpresse nach einem der vorigen Ansprüche, **dadurch gekennzeichnet, dass** ein auf der Aufnahme (6) liegender Rundballen (3) während eines Wickelvorgangs um eine horizontale Achse (10) drehbar ist.

## Claims

1. A round bale press (1) comprising a pressing chamber (2) for pressing a round bale (3, 3') of agricultural crop material and a bale wrapper (4) disposed downstream of the pressing chamber (2), wherein the bale wrapper (4) has a receiving means (6) for a pressed round bale (3) and a wrapping arm (8) rotatable about a vertical axis (7) above the receiving means (6) with at least one wrapping material delivery device (9) at an end for wrapping a round bale (3) on the receiving means (6) with wrapping material, wherein the bale wrapper (4) can be moved from a wrapping configuration (K_{w}) in which a round bale (3) can be wrapped with wrapping material into a non-wrapping configuration (Kₙ) in which an oversized round bale (3') can be unloaded from the pressing chamber (2) of the round bale press (1) wherein there are provided means with which the wrapping arm (8) is moveable laterally with respect to the receiving means (6) to move the bale wrapper (4) from a wrapping configuration (K_{w}) into a non-wrapping configuration (Kₙ), wherein the means include a pivotably moveable mounting of the wrapping arm (8), **characterised in that** a holding device (11) carrying the wrapping arm (8) is mounted pivotably moveably with respect to a frame (5) of the round bale press (1).

2. A round bale press according to claim 1 **characterised in that** in the non-wrapping configuration (Kₙ) the wrapping arm (8) is so positioned with respect to the receiving means (6) that an oversized round bale (3') which has been pressed in the pressing chamber (2) can be conveyed on to the receiving means (6), with avoidance of a collision with the wrapping arm (8) or with components (9, 11, 20) associated therewith, in order to be unloaded from there.

3. A round bale press according to claim 1 **characterised in that** the holding device (11) includes two carrier elements (12, 13) which are respectively mounted rotatably about an approximately vertical axis (15, 16) with respect to the frame (5) on mutually opposite sides of a bale rolling track (14) extending from the pressing chamber (2) to the receiving means (6), wherein the carrier elements (12, 13) in the wrapping configuration (K_{w}) are connected to afford a closed structure extending partially above the bale track (14) in order to mount the wrapping arm (8) above a round bale (3) to be wound which lies on the receiving means (6) and wherein the carrier elements (12, 13) in the non-wrapping configuration (Kₙ) are separated from each other in order to permit rolling of an oversized round bale (3') over the bale rolling track (14) without a height limitation.

4. A round bale press according to claim 3 **characterised in that** associated with the carrier elements (12, 13) respectively at the end regions thereof are mutually complimentary fixing means (17, 18) with which the carrier elements (12, 13) can be connected together in the wrapping configuration (K_{w}).

5. A round bale press according to one of the preceding claims **characterised in that** there are provided means with which the wrapping arm (8) can be adjusted in respect of height (h) with respect to the receiving means (6) in order to bring the bale wrapper (4) from a wrapping configuration (K_{w}) into a non-wrapping configuration (Kₙ).

6. A round bale press according to claim 5 **characterised in that** the means include a vertically oriented linear guide means (21) whereby a holding device (11, 20) carrying the wrapping arm (8) is mounted linearly moveably in respect of height with respect to a frame (5) of the round bale press (1), and wherein there are provided adjusting means (22) with which the holding device (20) can be moved in respect of height (h) with respect to the frame (5).

7. A round bale press according to one of the preceding claims **characterised by** a control device (19) which is operable by adjustment of the height (h) of the wrapping arm (8) in dependence on the size and in particular the diameter of the round bale (3) on the receiving means to move the wrapping material delivery device (9) to a height suited to wrapping of the round bale (3).

8. A round bale press according to one of the preceding claims **characterised in that** the bale wrapper (4) can be moved into a configuration which is suitable for transport and/or for storage of the bale press (1).

9. A round bale press according to one of the preceding claims **characterised by** a control device (19) which is operable to move the bale wrapper (4) into a suitable configuration (K_{w}, Kₙ) in dependence on an operating parameter, in particular in dependence on the size, preferably the diameter, of a pressed round bale (3, 3').

10. A round bale press according to one of the preceding claims **characterised in that** a round bale (3) lying on the receiving means (6) is rotatable about a horizontal axis (10) during a wrapping operation.

## Revendications

1. Presse à balles rondes (1) comprenant une chambre de pressage (2) pour presser une balle ronde (3, 3') à partir de produit agricole de récolte et comprenant une enrubanneuse de balle (4) disposée en aval de la chambre de pressage (2), l'enrubanneuse de balle (4) comportant un moyen de réception (6) pour une balle ronde pressée (3) et un bras d'enrubannage (8) tournant autour d'un axe vertical (7) au-dessus du moyen de réception (6) et muni d'au moins un équipement d'extrémité de fourniture de matériau d'enrubannage (9) pour envelopper une balle ronde (3) se trouvant sur le moyen de réception (6) avec du matériau d'enrubannage, l'enrubanneuse de balle (4) pouvant être amenée d'une configuration d'enrubannage (K_{w}), dans laquelle une balle ronde (3) peut être enveloppée avec du matériau d'enrubannage, à une configuration de non-enrubannage (Kₙ), dans laquelle une balle ronde surdimensionnée (3') peut être déchargée de la chambre de pressage (2) de la presse à balles rondes (1), des moyens étant prévus avec lesquels le bras d'enrubannage (8) est déplaçable latéralement par rapport au moyen de réception (6) pour faire passer l'enrubanneuse de balle (4) d'une configuration d'enrubannage (K_{w}) à une configuration de non-enrubannage (Kₙ), les moyens comportant un montage pivotant du bras d'enrubannage (8), **caractérisée en ce qu'**un équipement de retenue (11) portant le bras d'enrubannage (8) est monté pivotant par rapport à un bâti (5) de la presse à balles rondes (1).

2. Presse à balles rondes selon la revendication 1, **caractérisée en ce que**, dans la configuration de non-enrubannage (Kₙ), le bras d'enrubannage (8) est positionné par rapport au moyen de réception (6) de façon qu'une balle ronde surdimensionnée (3') pressée dans la chambre de pressage (2) puisse, en évitant une collision avec le bras d'enrubannage (8) ou avec des composants (9, 11, 20) associés à celui-ci, être amenée sur le moyen de réception (6) pour en être déchargée.

3. Presse à balles rondes selon la revendication 1, **caractérisée en ce que** l'équipement de retenue (11) comporte deux éléments porteurs (12, 13) qui sont chacun montés à rotation par rapport au bâti (5) autour d'un axe sensiblement vertical (15, 16) sur des côtés opposés d'un plateau de roulage de balle (14) s'étendant de la chambre de pressage (2) au moyen de réception (6), les éléments porteurs (12, 13) étant, dans la configuration d'enrubannage (K_{w}), reliés en formant une structure fermée partiellement au-dessus du plateau de balle (14) afin de positionner le bras d'enrubannage (8) au-dessus d'une balle ronde à enrubanner (3) posée sur le moyen de réception (6), et les éléments porteurs (12, 13) étant, dans la configuration de non-enrubannage (Kₙ), séparés l'un de l'autre pour permettre à une balle ronde surdimensionnée (3') de rouler sur le plateau de roulage de balle (14) sans limitation de hauteur.

4. Presse à balles rondes selon la revendication 3, **caractérisée en ce qu'**aux éléments porteurs (12, 13) sont respectivement associés, dans leurs zones extrêmes, des moyens de fixation (17, 18) complémentaires entre eux qui, dans la configuration d'enrubannage (K_{w}), permettent de relier les éléments porteurs (12, 13) entre eux.

5. Presse à balles rondes selon une des revendications précédentes, **caractérisée en ce que** des moyens sont prévus, lesquels permettent de déplacer dans la hauteur (h) le bras d'enrubannage (8) par rapport au moyen de réception (6) afin d'amener l'enrubanneuse de balle (4) d'une configuration d'enrubannage (K_{w}) à une configuration de non-enrubannage (Kₙ).

6. Presse à balles rondes selon la revendication 5, **caractérisée en ce que** les moyens comprennent un guide linéaire orienté verticalement (21), de sorte qu'un équipement de retenue (11, 20) portant le bras d'enrubannage (8) est monté avec une possibilité de déplacement linéaire en hauteur par rapport à un bâti (5) de la presse à balles rondes (1), et des moyens de positionnement (22) étant prévus, lesquels permettent de déplacer l'équipement de retenue (20) dans la hauteur (h) par rapport au bâti (5).

7. Presse à balles rondes selon une des revendications précédentes, **caractérisée par** un équipement de commande (19) qui est utilisable pour amener l'équipement de fourniture de matériau d'enrubannage (9) à une hauteur appropriée pour enrubanner la balle ronde (3), en réglant la hauteur (h) du bras d'enrubannage (8) en fonction de la dimension, en particulier du diamètre de la balle ronde (3) posée sur le moyen de réception (3).

8. Presse à balles rondes selon une des revendications précédentes, **caractérisée en ce que** l'enrubanneuse de balle (4) peut être amenée dans une configuration qui convient au transport et/ou au stockage de la presse à balles (1).

9. Presse à balles rondes selon une des revendications précédentes, **caractérisée par** un équipement de commande (19) qui est utilisable pour amener l'enrubanneuse de balle (4) dans une configuration correspondante (K_{w}, Kₙ) en fonction d'un paramètre d'exploitation, en particulier en fonction de la dimension, de préférence du diamètre, d'une balle ronde pressée (3, 3').

10. Presse à balles rondes selon une des revendications précédentes, **caractérisée en ce qu'**une balle ronde (3) posée sur le moyen de réception (6) peut, pendant une opération d'enrubannage, tourner selon un axe horizontal (10).
